# EUROPÄISCHE PATENTSCHRIFT

(11) **EP 4 193 575 B1**
(45) Veröffentlichungstag und Bekanntmachung des Hinweises auf die Patenterteilung: **01.11.2023**
(21) Anmeldenummer: 21785843.0
(22) Anmeldetag: 28.09.2021
(51) Int. Cl.: H04L 12/40

(54) **VERFAHREN ZUR KOMMUNIKATION ZWISCHEN EINEM ERSTEN PASSIVEN TEILNEHMER UND EINEM ZWEITEN PASSIVEN TEILNEHMER EINES BUSSYSTEMS**
METHOD FOR COMMUNICATION BETWEEN A FIRST PASSIVE SUBSCRIBER AND A SECOND PASSIVE SUBSCRIBER OF A BUS SYSTEM
PROCÉDÉ DE COMMUNICATION ENTRE UN PREMIER ABONNÉ PASSIF ET UN DEUXIÈME ABONNÉ PASSIF D'UN SYSTÈME DE BUS

(30) Priorität: 29.09.2020 DE 102020125391
(43) Veröffentlichungstag der Anmeldung: 14.06.2023
(73) Patentinhaber: Beckhoff Automation GmbH, 33415 Verl (DE)
(72) Erfinder: KAULMANN, Tim, 33104 Paderborn (DE); VONNAHME, Erik, 33154 Salzkotten (DE)
(74) Vertreter: Patentanwaltskanzlei WILHELM & BECK
(86) Internationale Anmeldenummer: PCT/EP2021/076584
(87) Internationale Veröffentlichungsnummer: WO 2022/069439

(56) Entgegenhaltungen:
- EP-A1- 1 650 670
- WO-A1-2020/156919
- DE-A1-102005 060 903

## Beschreibung

Die Erfindung betrifft ein Verfahren zur Kommunikation zwischen einem ersten passiven Teilnehmer und einem zweiten passiven Teilnehmer eines Bussystems.

Diese Patentanmeldung beansprucht die Priorität der deutschen Patentanmeldung DE 10 2020 125 391.5.

Aus dem Stand der Technik sind Bussysteme bekannt, bei denen Datentelegramme zwischen Teilnehmern ausgetauscht werden können. In solchen Bussystemen können dezentral angeordnete Geräte, beispielsweise einer Maschinenperipherie, wie E/A-Module, Messumformer, Antriebe, Ventile und Bedienerterminals über ein leistungsfähiges Echtzeit-Kommunikationssystem mit Automatisierungs-, Engineering- oder Visualisierungssystemen kommunizieren. Alle Geräte sind dabei über einen seriellen Bus, vorzugsweise einem Feldbus, miteinander vernetzt, wobei der Datenaustausch über den Bus meistens auf der Grundlage des Master-Slave-Prinzip ausgeführt wird.

Aktive Teilnehmer am Bussystem sind dabei Steuereinrichtungen. Sie sind im Besitz einer Buszugriffsberechtigung und bestimmen den Datentransfer auf dem Bus. Die aktiven Teilnehmer werden auch als Master-Geräte im seriellen Bussystem bezeichnet. Passive Teilnehmer sind dagegen in der Regel die Maschinenperipherie-Geräte. Sie erhalten keine Buszugriffsberechtigung, das heißt, sie dürfen nur empfangene Nachrichten quittieren oder auf Anfrage eines aktiven Teilnehmers Nachrichten an diesen übermitteln. Passive Teilnehmer werden deshalb auch als Slave-Geräte im seriellen Bussystem bezeichnet.

Die Master-Geräte enthalten im Allgemeinen eine Feldbusanschaltung, die das Bindeglied zwischen der zentralen Datenverarbeitung im Master-Gerät und dem Feldbusnetz darstellt und die das Busmanagement durchführt. In der oft als separate Baugruppe ausgeführten Feldbusanschaltung ist deshalb auch das vollständige Busprotokoll implementiert. Die Slave-Geräte wiederum weisen ein Schnittstellenmodul auf, das die Daten aus dem Slave-Gerät in das Datenformat des Feldbussystems umsetzt. Diese Schnittstellenmodule benötigen deshalb auch nur einen geringen Teil des Busprotokolls.

Ein wesentlicher Aspekt beim Aufbau eines solchen Bussystems ist, eine Kommunikation zwischen passiven Teilnehmern zu ermöglichen, um beispielsweise ein Datentelegramm von einem ersten passiven Teilnehmer zu einem zweiten passiven Teilnehmer weitergeben zu können. Dies ermöglicht, den Verdrahtungsaufwand beziehungsweise den Verkabelungsaufwand im Bussystem massiv zu reduzieren. Typischerweise erfolgt diese Kommunikation über eine differentielle Doppelleitung, über die das Datentelegram übermittelt wird. Die maximale Übertragungsgeschwindigkeit ist in einem solchen Bussystem begrenzt, beispielsweise auf 100 Mbit. Die Druckschrift US 8 498 370 B2 offenbart beispielsweise ein Kommunikationsverfahren, das auf einer differentiellen Doppelleitung basiert. Die Druckschrift EP 1 650 670 A1 offenbart ein serielles Bussystem.

Eine Aufgabe der vorliegenden Erfindung ist es, die Maximale Übertragungsgeschwindigkeit zwischen den passiven Teilnehmern zu erhöhen und hierzu ein geeignetes Verfahren, geeignete passive Teilnehmer und ein geeignetes Bussystem bereitzustellen.

Diese Aufgabe wird mit dem Verfahren zur Kommunikation zwischen einem ersten passiven Teilnehmer und einem zweiten passiven Teilnehmer eines Bussystems, dem ersten passiven Teilnehmer, dem zweiten passiven Teilnehmer und dem Bussystem der unabhängigen Patentansprüche gelöst. Vorteilhafte Ausgestaltungen sind in den abhängigen Patentansprüchen angegeben.

Ein Verfahren zur Kommunikation zwischen einem ersten passiven Teilnehmer und einem zweiten passiven Teilnehmer eines Bussystems ist derart ausgestaltet, dass für die Kommunikation eine erste differentielle Doppelleitung und eine zweite differentielle Doppelleitung genutzt werden. Über die erste differentielle Doppelleitung wird ein originales statisches Muster mit einer vorgegebenen Bitlänge übertragen, wobei das originale statische Muster einen Sende-Empfangs-Takt definiert. Über die zweite differentielle Doppelleitung werden originale Nutzdaten übertragen, wobei die originalen Nutzdaten ein Sendedatenwort mit der vorgegebenen Bitlänge umfassen. Der erste passive Teilnehmer kodiert das originale statische Muster in einem ersten Sende-SERDES-Element und sendet das kodierte statische Muster über die erste differentielle Doppelleitung an den zweiten passiven Teilnehmer. Ferner kodiert der erste passive Teilnehmer die originalen Nutzdaten zeitlich synchronisiert zum originalen statischen Muster in einem zweiten Sende-SERDES-Element und sendet die kodierten Nutzdaten über die zweite differentielle Doppelleitung an den zweiten passiven Teilnehmer. Der zweite passive Teilnehmer empfängt das kodierte statische Muster und die kodierten Nutzdaten und generiert aus dem kodierten statischen Muster einen Abtasttakt und einen zum Sende-Empfangs-Takt synchronen Takt, wobei der Abtasttakt einen ersten Phasenversatz zum Sende-Empfangs-Takt aufweist und der synchrone Takt einen zweiten Phasenversatz zum Sende-Empfangs-Takt aufweist. Der zweite passive Teilnehmer dekodiert das kodierte statische Muster mittels eines ersten Empfangs-SERDES-Elements und die kodierten Nutzdaten mittels eines zweiten Empfangs-SERDES-Elements und erhält so ein Empfangsdatenwort. Dabei werden das erste Empfangs-SERDES-Element und das zweite Empfangs-SERDES-Element anhand des Abtasttakts betrieben und das Empfangsdatenwort synchron zum synchronen Takt ausgegeben.

Die erste differentielle Doppelleitung und die zweite differentielle Doppelleitung können dabei als Leiterbahnen auf einer Leiterkarte ausgestaltet sein. In diesem Fall können der erste passive Teilnehmer und der zweite passive Teilnehmer ebenfalls auf der Leiterkarte angeordnet sein. Die erste differentielle Doppelleitung und die zweite differentielle Doppelleitung können auch über Klemmen geführt sein und jeweils ein Doppelkabel umfassen, so dass der erste passive Teilnehmer und der zweite passiver Teilnehmer in unterschiedlichen Gehäusen angeordnet sind. Das Sendedatenwort kann dabei eine Bitfolge mit der vorgegebenen Bitlänge umfassen, die vom ersten passiven Teilnehmer gesendet wird. Das Empfangsdatenwort kann eine Bitfolge mit der vorgegebenen Bitlänge umfassen, die vom zweiten passiven Teilnehmer empfangen wird. Um die Bitfolge des Empfangsdatenworts wieder zu erhalten, kann vorgesehen sein, dass das Empfangsdatenwort anhand des statischen Musters zeitlich versetzt dekodiert wird.

Durch das vorsehen der ersten differentiellen Doppelleitung, mit der das originale statische Muster übertragen wird, wird also ein zusätzlicher Kommunikationskanal bereitgestellt, mit dem ein Takt-Signal übertragen werden kann, verglichen mit herkömmlichen Systemen, bei denen nur ein Kommunikationskanal in Form einer differentiellen Doppelleitung für die Übertragung der Nutzdaten genutzt wird. Dadurch ist das Verfahren auch für hohe Übertragungsraten geeignet, da durch die durch den ersten Teilnehmer erfolgende synchrone Ausgabe von kodierten statischem Muster und dem Sendedatenwort der zweite passive Teilnehmer in der Lage ist, eine synchrone Zuordnung des Empfangsdatenworts und des kodierten statischen Musters vorzunehmen. Es kann vorgesehen sein, dass hierzu Längen einzelnen Leitungen der ersten differentiellen Doppelleitung und der zweiten differentiellen Doppelleitung maximal um eine vorgegebene Länge voneinander abweichen, wobei die vorgegebene Länge aus einer gewünschten Übertragungsrate und einer Signalausbreitungsgeschwindigkeit in den differentiellen Doppelleitungen ergibt.

Es kann vorgesehen sein, dass mindestens ein Gigabit pro Sekunde, insbesondere 1,25 GBit/s, über die erste differentielle Doppelleitung und mindestens ein Gigabit pro Sekunde, insbesondere 1,25 GBit/s, über die zweite differentielle Doppelleitung übertragen wird. Für diesen Fall kann vorgesehen sein, dass Längen einzelnen Leitungen der ersten differentiellen Doppelleitung und der zweiten differentiellen Doppelleitung maximal um 3 Zentimeter voneinander abweichen, beispielsweise wenn die erste differentielle Doppelleitung und die zweite differentielle Doppelleitung als Leiterbahnen auf einer Leiterkarte ausgestaltet sind.

In einer Ausführungsform des Verfahrens entspricht der Sende-Empfangs-Takt einem Zehntel einer über die erste differentielle Doppelleitung beziehungsweise über die zweite differentielle Doppelleitung übertragenen Datenrate. Dadurch wird ein vorteilhaftes Verhältnis aus der vorgegebenen Bitlänge und dem Abtasttakt erreicht.

In einer Ausführungsform des Verfahrens entspricht der Abtasttakt der über die erste differentielle Doppelleitung beziehungsweise über die zweite differentielle Doppelleitung übertragenen Datenrate oder der Hälfte der über die erste differentielle Doppelleitung beziehungsweise über die zweite differentielle Doppelleitung übertragenen Datenrate. Diese beiden Verhältnisse ermöglichen ein vorteilhaftes Verhältnis aus Datenrate und Abtasttakt.

In einer Ausführungsform des Verfahrens beträgt der erste Phasenversatz 90 Grad. Dadurch kann das Empfangsdatenwort in einem Datenauge abgetastet werden.

In einer Ausführungsform des Verfahrens beträgt der zweite Phasenversatz 18 Grad. Dadurch kann das Empfangsdatenwort ebenfalls in einem Datenauge abgetastet werden.

In einer Ausführungsform des Verfahrens umfasst das statische Muster eine erste Anzahl an ersten Bits mit dem Bitwert 1 und eine zweite Anzahl an zweiten Bits mit dem Bitwert 0. Im statischen Muster sind zunächst die ersten Bits und dann die zweiten Bits angeordnet, wobei die erste Anzahl und die zweite Anzahl zusammen der Bitlänge entspricht. Dadurch kann eine einfache Übertragung des statischen Musters erfolgen. Es kann vorgesehen sein, dass die erste Anzahl und die zweite Anzahl identisch sind und damit jeweils der halben Bitlänge entsprechen.

In einer Ausführungsform des Verfahrens wird das durch das erste Empfangs-SERDES-Element dekodierte statische Muster mittels eines ersten Schieberegisters geschoben, bis an einer Ausgabe des ersten Empfangs-SERDES-Elements das originale statische Muster ausgegeben wird. Das durch das zweite Empfangs-SERDES-Element dekodierte Empfangsdatenwort wird mittels eines zweiten Schieberegisters um eine zum ersten Schieberegister identische Anzahl von Bits geschoben. Dies ermöglicht eine Grobjustage der Übertragungen.

In einer Ausführungsform des Verfahrens werden das kodierte statische Muster im zweiten passiven Teilnehmer durch ein erstes Verzögerungselement verzögert und die kodierte Nutzdaten durch ein zweites Verzögerungselement verzögert. Bei einer Initialisierung wird zunächst die Verzögerung des ersten Verzögerungselements und des zweiten Verzögerungselements jeweils schrittweise reduziert und überprüft, ob sich ein abgetastetes Taktmuster verändert. So wird eine untere Grenze für die Verzögerung ermittelt. Die untere Grenze ergibt sich insbesondere dann, wenn sich das Taktmuster verändert. Anschließend wird die Verzögerung des ersten Verzögerungselements und des zweiten Verzögerungselements jeweils schrittweise erhöht und überprüft, ob sich ein abgetastetes Taktmuster verändert. So wird eine obere Grenze für die Verzögerung ermittelt. Die obere Grenze ergibt sich insbesondere dann, wenn sich das Taktmuster verändert. Anschließend wird die Verzögerung des ersten Verzögerungselements und des zweiten Verzögerungselements auf einen Mittelwert aus unterer Grenze und oberer Grenze eingestellt. Somit kann erreicht werden, dass eine Abtastung zu einem optimalen Zeitpunkt stattfindet. Dadurch wird eine Feinjustage ermöglicht. Die Feinjustage und die weiter oben beschriebene Grobjustage können in beliebiger Reihenfolge durchgeführt werden. Eine alternative Möglichkeit besteht darin, bei Kenntnis einer Periode des Taktmusters und einer unteren Grenze beziehungsweise einer oberen Grenze des Taktmusters die Abtastung um eine halbe Periode versetzt zur bekannten unteren oder oberen Grenze einzustellen.

In einer Ausführungsform des Verfahrens werden die Nutzdaten mittels 8b10b-Kodierung kodiert und dekodiert, wobei die vorgegebene Bitlänge 10 Bits entspricht. Dadurch wird eine robuste Kommunikation möglich, bei der sich eine Anzahl der Einsen der Sendedatenworte jeweils maximal um zwei von einer Anzahl der Nullen unterscheidet, die Sendedatenworte also vier Einsen und sechs Nullen, fünf Einsen und fünf Nullen oder sechs Einsen und vier Nullen beinhalten. Damit können 8 Bit kodiert und zusätzliche Steuerworte übertragen werden.

Die Erfindung umfasst ferner ein Bussystem mit einem ersten passiven Teilnehmer und einem zweiten passiven Teilnehmer. Das Bussystem kann ferner einen aktiven Teilnehmer, also eine Steuerung umfassen. Insbesondere der erste passive Teilnehmer und der zweite passive Teilnehmer können zusammen mit der ersten differentiellen Doppelleitung und der zweiten differentiellen Doppelleitung auf einer Leiterkarte angeordnet sein, wobei die Leiterkarte ein PCB (printed circuit board) sein kann. Die erste differentielle Doppelleitung und die zweite differentielle Doppelleitung können in diesem Fall als Leiterbahnen ausgestaltet sein.

Es kann vorgesehen sein, dass der zweite passive Teilnehmer auch eingerichtet ist, über eine weitere erste differentielle Doppelleitung und eine weitere zweite differentielle Doppelleitung mit dem ersten passiven Teilnehmer zu kommunizieren und dabei das beschriebene Verfahren für eine Kommunikation vom zweiten passiven Teilnehmer zum ersten passiven Teilnehmer verwendet wird.

Der erste passive Teilnehmer des Bussystems weist dazu einen ersten Sendeanschluss für eine erste differentielle Doppelleitung, einen zweiten Sendeanschluss für eine zweite differentielle Doppelleitung, ein erstes Sende-SERDES-Element und ein zweites Sende-SERDES-Element auf und ist eingerichtet, ein originales statisches Muster mit einer vorgegebenen Bitlänge im ersten Sende-SERDES-Element zu kodieren und über den ersten Sendeanschluss als kodierte statische Muster zu senden. Das originale statische Muster definiert dabei einen Sende-Empfangs-Takt. Der erste passive Teilnehmer ist ferner eingerichtet, originale Nutzdaten zeitlich synchronisiert zum originalen statischen Muster im zweiten Sende-SERDES-Element zu kodieren und über den zweiten Sendeanschluss als kodierte Nutzdaten zu senden. Die originalen Nutzdaten umfassen dabei ein Sendedatenwort mit der vorgegebenen Bitlänge.

Der zweite passive Teilnehmer des Bussystems weist dazu einen ersten Empfangsanschluss für eine erste differentielle Doppelleitung, einen zweiten Empfangsanschluss für eine zweite differentielle Doppelleitung, ein erstes Empfangs-SERDES-Element und ein zweites Empfangs-SERDES-Element auf. Der zweite passive Teilnehmer ist eingerichtet, ein kodiertes statisches Muster mit einer vorgegebenen Bitlänge über den ersten Empfangsanschluss zu empfangen und kodierte Nutzdaten mit der vorgegebenen Bitlänge über den zweiten Empfangsanschluss zu empfangen. Ferner ist der zweite passive Teilnehmer eingerichtet, aus dem kodierten statischen Muster einen Abtasttakt und einen zu einem Sende-Empfangs-Takt synchronen Takt zu generieren, wobei der Abtasttakt einen ersten Phasenversatz zum Sende-Empfangs-Takt aufweist und der synchrone Takt einen zweiten Phasenversatz zum Sende-Empfangs-Takt aufweist. Der zweite passive Teilnehmer ist ferner eingerichtet, das kodierte statische Muster mittels des ersten Empfangs-SERDES-Elements zu dekodieren und die kodierte Nutzdaten mittels des zweiten Empfangs-SERDES-Elements zu dekodieren und so ein Empfangsdatenwort zu erhalten. Dabei können das erste Empfangs-SERDES-Element und das zweite Empfangs-SERDES-Element anhand des Abtasttakts betrieben werden, wobei das Empfangsdatenwort synchron zum synchronen Takt ausgegeben werden kann.

In einer Ausführungsform des Bussystems ist der erste passive Teilnehmer eingerichtet, mindestens ein Gigabit pro Sekunde, insbesondere 1,25 GBit/s, über die erste differentielle Doppelleitung und mindestens ein Gigabit pro Sekunde, insbesondere 1,25 GBit/s, über die zweite differentielle Doppelleitung zu übertragen.

In einer Ausführungsform des Bussystems entspricht der Sende-Empfangs-Takt einem Zehntel einer über die erste differentielle Doppelleitung beziehungsweise über die zweite differentielle Doppelleitung übertragenen Datenrate.

In einer Ausführungsform des Bussystems umfasst das originale statische Muster eine erste Anzahl an ersten Bits mit dem Bitwert 1 und eine zweite Anzahl an zweiten Bits mit dem Bitwert 0. Im statischen Muster sind zunächst die ersten Bits und dann die zweiten Bits angeordnet, wobei die erste Anzahl und die zweite Anzahl zusammen der Bitlänge entsprechen.

In einer Ausführungsform des Bussystems ist der erste passive Teilnehmer eingerichtet, die originale Nutzdaten mittels 8b10b-Kodierung zu kodieren, wobei die Bitlänge 10 Bits beträgt.

In einer Ausführungsform des Bussystems entspricht der Abtasttakt der über die erste differentielle Doppelleitung beziehungsweise über die zweite differentielle Doppelleitung übertragenen Datenrate oder der Hälfte der über die erste differentielle Doppelleitung beziehungsweise über die zweite differentielle Doppelleitung übertragenen Datenrate.

In einer Ausführungsform des Bussystems beträgt der erste Phasenversatz 90 Grad. In einer Ausführungsform des Bussystems beträgt der zweite Phasenversatz 18 Grad.

In einer Ausführungsform des Bussystems umfasst das kodierte statische Muster eine erste Anzahl an ersten Bits mit dem Bitwert 1 und eine zweite Anzahl an zweiten Bits mit dem Bitwert 0. Im statischen Muster sind zunächst die ersten Bits und dann die zweiten Bits angeordnet.

In einer Ausführungsform des Bussystems ist der zweite passive Teilnehmer eingerichtet, das durch das erste Empfangs-SERDES-Element dekodierte statische Muster mittels eines ersten Schieberegisters zu schieben, bis an einer Ausgabe des ersten Empfangs-SERDES-Elements das originale statische Muster ausgegeben wird und das durch das zweite Empfangs-SERDES-Element dekodierte Empfangsdatenwort mittels eines zweiten Schieberegisters um eine zum ersten Schieberegister identische Anzahl von Bits zu schieben.

In einer Ausführungsform des Bussystems weist der zweite passive Teilnehmer ferner ein erstes Verzögerungselement zwischen dem ersten Empfangseingang und dem ersten Empfänger-SERDES-Element und ein zweites Verzögerungselement zwischen dem zweiten Empfangseingang und dem zweiten Empfänger-SERDES-Element auf. Der zweite passive Teilnehmer ist eingerichtet, das kodierte statische Muster durch das erste Verzögerungselement zu verzögern und die kodierten Nutzdaten durch das zweite Verzögerungselement zu verzögern. Der zweite passive Teilnehmer ist ferner eingerichtet, bei einer Initialisierung zunächst die Verzögerung des ersten Verzögerungselements und des zweiten Verzögerungselements schrittweise zu reduzieren und zu überprüfen, ob sich ein abgetastetes Taktmuster verändert und so eine untere Grenze für die Verzögerung zu ermitteln und anschließend die Verzögerung des ersten Verzögerungselements und des zweiten Verzögerungselements schrittweise zu erhöhen und zu überprüfen, ob sich ein abgetastetes Taktmuster verändert und so eine obere Grenze für die Verzögerung zu ermitteln. Ferner ist der zweite passive Teilnehmer eingerichtet, anschließend die Verzögerung des ersten Verzögerungselements und des zweiten Verzögerungselements auf einen Mittelwert aus unterer Grenze und oberer Grenze einzustellen.

In einer Ausführungsform des Bussystems ist der zweite passive Teilnehmer eingerichtet, die kodierten Nutzdaten mittels 8b10b-Kodierung zu dekodieren, wobei die vorgegebene Bit-länge 10 Bit beträgt.

In einem Ausführungsbeispiel des Bussystems weist der zweite passive Teilnehmer einen weiteren ersten Sendeanschluss für eine weitere erste differentielle Doppelleitung, einen weiteren zweiten Sendeanschluss für eine weitere zweite differentielle Doppelleitung, ein weiteres erstes Sende-SERDES-Element und ein weiteres zweites Sende-SERDES-Element auf. Der zweite passive Teilnehmer ist eingerichtet, ein aus der vorgegebenen Bitlänge bestehendes weiteres originales statisches Muster im weiteren ersten Sende-SERDES-Element zu kodieren und über den weiteren ersten Sendeanschluss als weitere kodierte statische Muster zu senden, wobei das weitere originale statische Muster einen weiteren Sende-Empfangs-Takt definiert. Ferner ist der zweite passive Teilnehmer eingerichtet, weitere originale Nutzdaten zeitlich synchronisiert zum weiteren originale statischen Muster im weiteren zweiten Sende-SERDES-Element zu kodieren und über den weiteren zweiten Sendeanschluss als weitere kodierte Nutzdaten zu senden, wobei die weiteren originalen Nutzdaten ein weiteren Sendedatenwort mit der vorgegebenen Bitlänge umfassen. Der erste passive Teilnehmer weist einen weiteren ersten Empfangsanschluss für die weitere erste differentielle Doppelleitung, einen weiteren zweiten Empfangsanschluss für die weitere zweite differentielle Doppelleitung, ein weiteres erstes Empfangs-SERDES-Element und ein weiteres zweites Empfangs-SERDES-Element auf. Der erste passive Teilnehmer ist eingerichtet, das weitere kodierte statische Muster über den weiteren ersten Empfangsanschluss zu empfangen und die weiteren kodierten Nutzdaten über den weiteren zweiten Empfangsanschluss zu empfangen. Der erste passive Teilnehmer ist ferner eingerichtet, aus dem weiteren kodierten statischen Muster einen weiteren Abtasttakt und einen zum weiteren Sende-Empfangs-Takt weiteren synchronen Takt zu generieren, wobei der weitere Abtasttakt einen weiteren ersten Phasenversatz zum weiteren Sende-Empfangs-Takt aufweist und der weitere synchrone Takt einen weiteren zweiten Phasenversatz zum weiteren Sende-Empfangs-Takt aufweist. Der erste passive Teilnehmer ist ferner eingerichtet, das weitere kodierte statische Muster mittels des weiteren ersten Empfangs-SERDES-Elements zu dekodieren und die weiteren kodierten Nutzdaten mittels des weiteren zweiten Empfangs-SERDES-Elements zu dekodieren und so ein weiteres Empfangsdatenwort zu erhalten. Der erste passive Teilnehmer ist eingerichtet, das weitere erste Empfangs-SERDES-Element und das weitere zweite Empfangs-SERDES-Element anhand des weiteren Abtasttakts zu betreiben und das weitere Empfangsdatenwort synchron zum weiteren synchronen Takt auszugeben.

Die Erfindung wird nachfolgend anhand von Ausführungsbeispielen und unter Bezugnahme auf Figuren näher erläutert. Dabei zeigen jeweils in schematischer Darstellung
- Fig. 1: ein Bussystem;
- Fig. 2: Takte und Nutzdaten während einer Kommunikation; und
- Fig. 3: ein weiteres Bussystem.

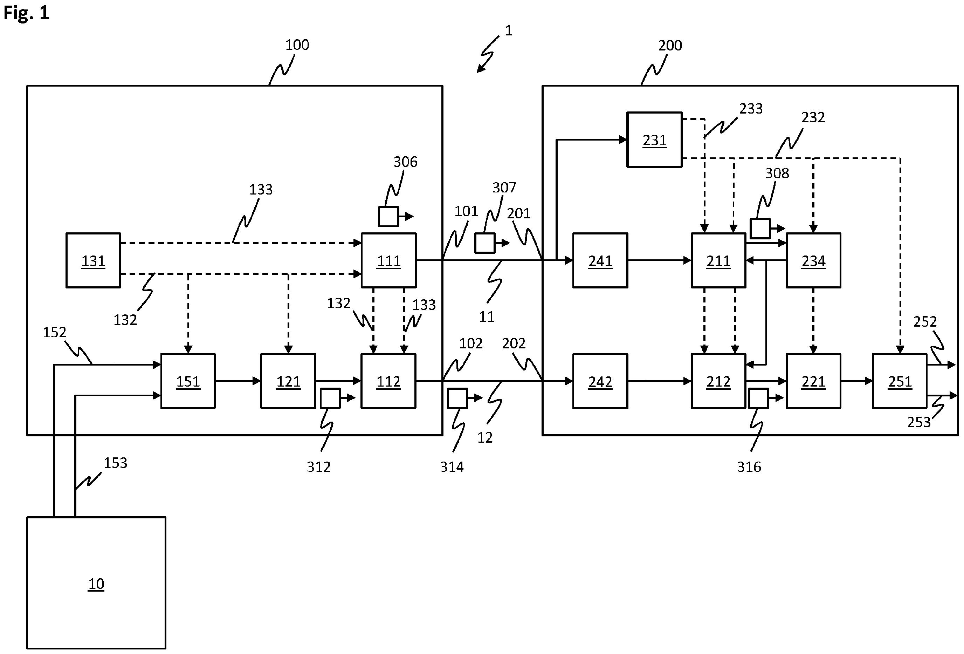

Fig. 1 zeigt einen ersten passiven Teilnehmer 100 und einen zweiten passiven Teilnehmer 200 eines Bussystems 1, wobei ferner ein aktiver Teilnehmer 10 des Bussystems 1 gezeigt ist. Der erste passive Teilnehmer 100 weist einen ersten Sendeanschluss 101 für eine erste differentielle Doppelleitung 11 und einen zweiten Sendeanschluss 102 für eine zweite differentielle Doppelleitung 12 auf. Ferner weist der erste passive Teilnehmer 100 ein erstes Sende-SERDES-Element 111 und ein zweites Sende-SERDES-Element 112 auf. Mit der ersten differentiellen Doppelleitung 11 und der zweiten differentiellen Doppelleitung 12 ist der erste passive Teilnehmer 100 mit dem zweiten passiven Teilnehmer 200 verbunden. Der zweite passive Teilnehmer 200 weist einen ersten Empfangsanschluss 201 für die erste differentielle Doppelleitung 11 und einen zweiten Empfangsanschluss 202 für die zweite differentielle Doppelleitung 12 auf. Ferner weist der zweite passive Teilnehmer 200 ein erstes Empfangs-SERDES-Element 211 und ein zweites Empfangs-SERDES-Element 212 auf.

Das erste Sende-SERDES-Element 111 kann auch als erster Parallel-Seriell-Wandler bezeichnet werden. Das zweite Sende-SERDES-Element 112 kann auch als zweiter Parallel-Seriell-Wandler bezeichnet werden. Das erste Empfangs-SERDES-Element 211 kann auch als erster Seriell-Parallel-Wandler bezeichnet werden. Das zweite Empfangs-SERDES-Element 212 kann auch als zweiter Seriell-Parallel-Wandler bezeichnet werden.

Der erste passive Teilnehmer 100 ist eingerichtet, ein originales statisches Muster 306 mit einer vorgegebenen Bitlänge im ersten Sende-SERDES-Element 111 zu kodieren und über den ersten Sendeanschluss 101 als kodierte statische Muster 307 zu senden. Das originale statische Muster 306 definiert einen Sende-Empfangs-Takt 301 (nicht in Fig. 1 dargestellt). Ferner ist eingerichtet der erste passive Teilnehmer 100 eingerichtet, originale Nutzdaten 312 zeitlich synchronisiert zum originalen statischen Muster 306 im zweiten Sende-SERDES-Element 112 zu kodieren und über den zweiten Sendeanschluss 102 als kodierte Nutzdaten 314 zu senden, wobei die originale Nutzdaten 312 ein Sendedatenwort 311 (nicht in Fig. 1 dargestellt) mit der vorgegebenen Bitlänge umfassen.

Der zweite passive Teilnehmer 200 ist eingerichtet, ein kodiertes statisches Muster 307 mit einer vorgegebenen Bitlänge über den ersten Empfangsanschluss 201 zu empfangen und kodierte Nutzdaten 314 mit der vorgegebenen Bitlänge über den zweiten Empfangsanschluss 202 zu empfangen. Ferner ist der zweite passive Teilnehmer 200 eingerichtet, aus dem kodierten statischen Muster 307 einen Abtasttakt 302 (nicht in Fig. 1 dargestellt) und einen zu einem Sende-Empfangs-Takt 301 synchronen Takt 303 (nicht in Fig. 1 dargestellt) zu generieren, wobei der Abtasttakt 302 einen ersten Phasenversatz zum Sende-Empfangs-Takt 301 aufweist und der synchrone Takt 303 einen zweiten Phasenversatz zum Sende-Empfangs-Takt 301 aufweist. Ferner ist der zweite passive Teilnehmer 200 eingerichtet ist, das kodierte statische Muster 307 mittels des ersten Empfangs-SERDES-Elements 211 zu dekodieren und so ein dekodiertes statisches Muster 308 zu erhalten und ferner eingerichtet, die kodierten Nutzdaten 314 mittels des zweiten Empfangs-SERDES-Elements 212 zu dekodieren und so ein Empfangsdatenwort als Teil von dekodierten Nutzdaten 316 zu erhalten. Das erste Empfangs-SERDES-Element 211 und das zweite Empfangs-SERDES-Element 212 können anhand des Abtasttakts 302 betrieben werden, wobei das Empfangsdatenwort synchron zum synchronen Takt 303 ausgegeben werden kann.

In einem Verfahren zur Kommunikation zwischen dem ersten passiven Teilnehmer 100 und dem zweiten passiven Teilnehmer 200 des Bussystems 1 wird für die Kommunikation die erste differentielle Doppelleitung 11 und die zweite differentielle Doppelleitung 12 genutzt. Über die erste differentielle Doppelleitung 11 wird ein originales statisches Muster 306 mit einer vorgegebenen Bitlänge übertragen. Das originale statische Muster 306 definiert einen Sende-Empfangs-Takt 301. Über die zweite differentielle Doppelleitung 12 werden originale Nutzdaten 312 übertragen. Die originalen Nutzdaten 312 umfassen ein Sendedatenwort 311 mit der vorgegebenen Bitlänge. Der erste passive Teilnehmer 100 kodiert das originale statische Muster 306 in einem ersten Sende-SERDES-Element 111 und sendet es als kodiertes statisches Muster 307 über die erste differentielle Doppelleitung 11 an den zweiten passiven Teilnehmer 200. Ferner kodiert der erste passive Teilnehmer 100 die originalen Nutzdaten 312 zeitlich synchronisiert zum originalen statischen Muster 306 in einem zweiten Sende-SERDES-Element 112 und sendet sie als kodierte Nutzdaten 314 über die zweite differentielle Doppelleitung 12 an den zweiten passiven Teilnehmer 200. Der zweite passive Teilnehmer 200 empfängt das kodierte statische Muster 307 und die kodierte Nutzdaten 314 und generiert aus dem kodierten statischen Muster 307 einen Abtasttakt 302 und einen zum Sende-Empfangs-Takt 301 synchronen Takt 303. Der Abtasttakt 302 weist einen ersten Phasenversatz zum Sende-Empfangs-Takt 301 auf. Der synchrone Takt 303 weist einen zweiten Phasenversatz zum Sende-Empfangs-Takt 301 auf. Der zweite passive Teilnehmer 200 dekodiert das kodierte statische Muster 307 mittels eines ersten Empfangs-SERDES-Elements 211 die kodierte Nutzdaten 314 mittels eines zweiten Empfangs-SERDES-Elements 212 und erhält so ein Empfangsdatenwort. Das erste Empfangs-SERDES-Element 211 und das zweite Empfangs-SERDES-Element 212 werden anhand des Abtasttakts 302 betrieben, wobei das Empfangsdatenwort synchron zum synchronen Takt 303 ausgegeben wird.

Es kann vorgesehen sein, dass mindestens ein Gigabit pro Sekunde, insbesondere 1,25 GBit/s, über die erste differentielle Doppelleitung 11 und mindestens ein Gigabit pro Sekunde, insbesondere 1,25 GBit/s, über die zweite differentielle Doppelleitung 12 übertragen werden können. Es kann vorgesehen sein, der Sende-Empfangs-Takt 301 einem Zehntel einer über die erste differentielle Doppelleitung 11 beziehungsweise über die zweite differentielle Doppelleitung 12 übertragenen Datenrate entspricht. Es kann also vorgesehen sein, dass 1,25 GBit/s über die erste differentielle Doppelleitung 11 beziehungsweise die zweite differentielle Doppelleitung 12 übertragen werden und der Sende-Empfangs-Takt 301 125 MHz, also 125 Mbit/s entspricht.

Im Folgenden werden weitere Elemente des ersten passiven Teilnehmers 100 und des zweiten passiven Teilnehmers 200 beschrieben, die optional sind und das beschriebene Bussystem 1 weiterbilden. Der erste passive Teilnehmer 100 beinhaltet eine Kodiereinheit 121, mit der die Nutzdaten 310 kodiert werden können. Dabei kann vorgesehen sein, eine sogenannte 8b10b-Kodierung zu verwenden, bei der 8 Informationsbits durch 10 Leitungsbits kodiert werden. Die vorgegebene Bitlänge entspricht dann 10 Bits, so dass das statische Muster ebenfalls 10 Bits umfasst. Insbesondere wird eine 8 Bits umfassende Information in ein 10 Bits umfassendes Sendedatenwort 311 umgewandelt derart, dass das Sendedatenwort 311 mindestens vier 1-Bits und maximal sechs 1-Bits umfasst. Der zweite passive Teilnehmer 200 weist eine Dekodiereinheit 221 auf, mit der die Nutzdaten 310 analog zur Kodiereinheit 121 dekodiert werden können und beispielsweise aus dem 10 Bits umfassenden Empfangsdatenwort wieder die 8 Bits umfassende Information gewonnen werden kann.

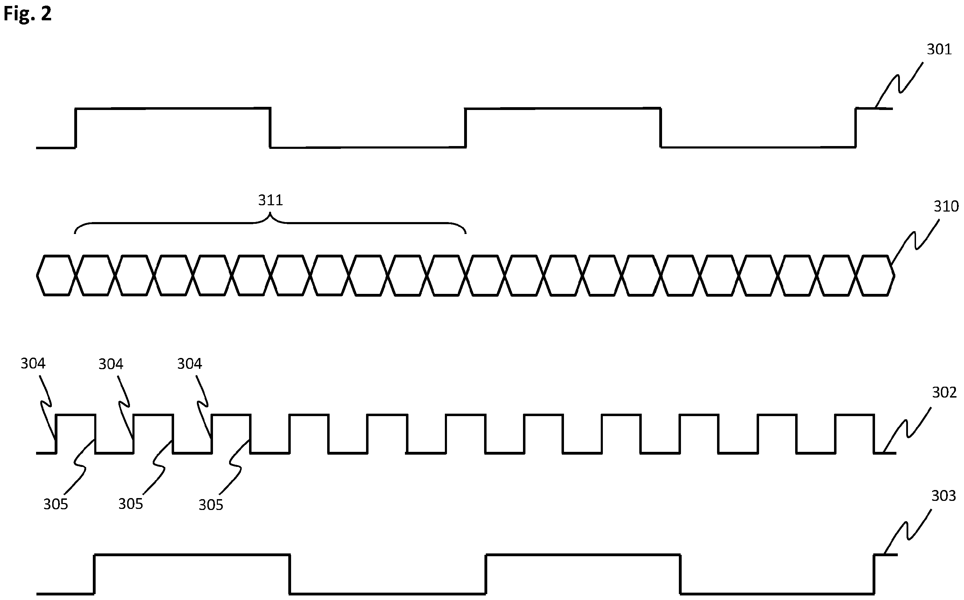

Es kann vorgesehen sein, dass der erste passive Teilnehmer 100 einen ersten Phasenregler 131 umfasst. Der erste Phasenregler 131 kann eingerichtet sein, den Sende-Empfangs-Takt 301 auszugeben. Der Sende-Empfangs-Takt 301 wird dabei insbesondere an das erste Sende-SERDES-Element 111 mittels einer ersten Taktleitung 132 ausgegeben werden. Ferner kann der Sende-Empfangs-Takt 301 über die erste Taktleitung 132 vom ersten Sende-SERDES-Element 111 an das zweite Sende-SERDES-Element 112 weitergegeben werden. Ferner kann der Sende-Empfangs-Takt 301 auch über die erste Taktleitung 132 an die Kodiereinheit 121 weitergegeben werden. Der erste Phasenregler 131 kann als PLL ausgestaltet sein. Ferner kann der erste Phasenregler 131 eingerichtet sein, über eine zweite Taktleitung 133 einen Datentakt auszugeben, der der Übertragungsrate der ersten differentiellen Doppelleitung 11 beziehungsweise der zweiten differentiellen Doppelleitung 12 entspricht. Alternativ kann der erste Phasenregler 131 eingerichtet sein, über die zweite Taktleitung 133 einen Datentakt auszugeben, der eine Datenrate aufweist, die der Hälfte der Übertragungsrate der ersten differentiellen Doppelleitung 11 beziehungsweise der zweiten differentiellen Doppelleitung 12 entspricht. Im ersten Fall können die einzelnen zu übertragenden Bits bei jeder steigenden Flanke 304 (in Fig. 2 dargestellt) des Datentakts übertragen werden. Im zweiten Fall können die einzelnen zu übertragenden Bits bei jeder steigenden Flanke 304 und jeder fallenden Flanke 305 (in Fig. 2 dargestellt) des Datentakts übertragen werden.

Es kann vorgesehen sein, dass das statische Muster eine erste Anzahl an ersten Bits mit dem Bitwert 1 und eine zweite Anzahl an zweiten Bits mit dem Bitwert 0 umfasst, wobei im statischen Muster zunächst die ersten Bits und dann die zweiten Bits angeordnet sind, wobei die erste Anzahl und die zweite Anzahl zusammen der Bitlänge entspricht. Ist die Bitlänge Zehn, kann das statische Muster insbesondere die Formen
1000000000
1100000000
1110000000
1111000000
1111100000
1111110000
1111111000
1111111100
1111111110
annehmen. Grundsätzlich ist es auch möglich, das statische Muster zu verändern, dadurch können insgesamt neun verschiedene Informationen übertragen werden. Dabei kann vorgesehen sein, dass der über die erste Taktleitung 132 ausgegebene Sende-Empfangs-Takt 301 jeweils synchron mit dem Beginn des statischen Musters ist.

In einem Ausführungsbeispiel sind die erste Anzahl und die zweite Anzahl identisch. In diesem Fall, der im obigen Beispiel dem statischen Muster 1111100000 mit fünf Einsen und fünf Nullen entspricht, ist der Sende-Empfangs-Takt 301 als Rechtecksignal mit einem Zehntel der Übertragungsrate ausgestaltet.

Der zweite passive Teilnehmer 200 beinhaltet einen zweiten Phasenregler 231. Der zweite Phasenregler 231 ist mit dem ersten Empfangsanschluss 201 verbunden und eingerichtet, aus dem übertragenen kodierten statischen Muster 307 den zum Sende-Empfangs-Takt 301 synchronen Takt 303 und den Abtasttakt 302 zu erzeugen. Der Abtasttakt 302 kann dabei eine zum Datentakt des ersten passiven Teilnehmers 100 identische Datenrate aufweisen. Der synchrone Takt 303 kann über eine dritte Taktleitung 232 ausgegeben werden. Der Abtasttakt 302 kann über eine vierte Taktleitung 233 ausgegeben werden. Die dritte Taktleitung 232 verbindet den zweiten Phasenregler 231 mit dem ersten Empfangs-SERDES-Element 211, dem zweiten Empfangs-SERDES-Element 212 und der Dekodiereinheit 221. Der zweite Phasenregler 231 kann als PLL ausgestaltet sein.

Es kann vorgesehen sein, dass der erste Phasenversatz des synchronen Takts 303 90 Grad beträgt. Es kann vorgesehen sein, dass der zweite Phasenversatz des Abtasttakts 302 18 Grad beträgt.

Über die vierte Taktleitung 233 wird der Abtasttakt 302 an das erste Empfangs-SERDES-Element 211 und das zweite Empfangs-SERDES-Element 212 weitergegeben. Anhand des Abtasttakts 302 können die einzelnen Bits des kodierten statischen Musters 307 im ersten Empfangs-SERDES-Element 211 und der kodierte Nutzdaten 314 im zweiten Empfangs-SERDES-Element 212 abgetastet werden, wobei diese jeweils mit Hilfe des synchronen Takts 303 zu einem Empfangsdatenwort zusammengefasst werden.

Das durch das erste Empfangs-SERDES-Element 211 dekodierte statische Muster 308 kann an eine Taktrückgewinnungseinheit 234 des zweiten passiven Teilnehmers 200 weitergegeben werden. Dies ermöglicht eine Grobjustage der Empfangsdatenwörter. Hierzu kann das durch das erste Empfangs-SERDES-Element 211 dekodierte statische Muster 308 mittels eines ersten Schieberegisters geschoben werde, bis an einer Ausgabe des ersten Empfangs-SERDES-Elements 211 das originale statische Muster 306 ausgegeben wird und ferner das durch das zweite Empfangs-SERDES-Element 212 dekodierte Empfangsdatenwort mittels eines zweiten Schieberegisters um eine zum ersten Schieberegister identische Anzahl von Bits geschoben werden. Die Taktrückgewinnungseinheit 234 ist ebenfalls mit der dritten Taktleitung 232 verbunden. Das erste Schieberegister kann dabei in den zweiten passiven Teilnehmer 200 und dort insbesondere in das erste Empfangs-SERDES-Element 211 integriert sein. Das zweite Schieberegister kann dabei in den zweiten passiven Teilnehmer 200 und dort insbesondere in das zweite Empfangs-SERDES-Element 212 integriert sein.

Der zweite passive Teilnehmer 200 weist ferner ein erstes Verzögerungselement 241 und ein zweites Verzögerungselement 242 auf. Das kodierte statische Muster 307 wird durch das erste Verzögerungselement 241 verzögert und die kodierte Nutzdaten 314 werden durch das zweite Verzögerungselement 242 verzögert. Dabei kann, wie in Fig. 1 dargestellt, vorgesehen sein, dass das zum zweiten Phasenregler 231 weitergegebene kodierte statische Muster 307 nicht durch das erste Verzögerungselement 241 geführt wird und somit den zweiten Phasenregler 231 ohne Verzögerung erreicht. Bei einer Initialisierung wird zunächst die Verzögerung des ersten Verzögerungselements 241 und des zweiten Verzögerungselements 242 schrittweise reduziert und überprüft, ob sich ein abgetastetes Taktmuster verändert. So wird eine untere Grenze für die Verzögerung ermittelt. Anschließend wird die Verzögerung des ersten Verzögerungselements 241 und des zweiten Verzögerungselements 242 schrittweise erhöht und überprüft, ob sich ein abgetastetes Taktmuster verändert. So wird eine obere Grenze für die Verzögerung ermittelt. Anschließend wird die Verzögerung des ersten Verzögerungselements 241 und des zweiten Verzögerungselements 242 auf einen Mittelwert aus unterer Grenze und oberer Grenze eingestellt. Eine alternative Möglichkeit besteht darin, bei Kenntnis einer Periode des Taktmusters und einer unteren Grenze beziehungsweise einer oberen Grenze des Taktmusters die Abtastung um eine halbe Periode versetzt zur bekannten unteren oder oberen Grenze einzustellen.

Der erste passive Teilnehmer 100 weist ein erstes FIFO-Element 151 auf. Das erste FIFO-Element 151 ist mit dem aktiven Teilnehmer 10 über eine Sendedatenleitung 152 und eine erste Kontrollleitung 153 verbunden. Dabei können die Sendedatenleitung 152 und die erste Kontrollleitung 153 im Gegensatz zur Darstellung der Fig. 1 auch über weitere, nicht dargestellte passive Teilnehmer geführt sein. Das erste FIFO-Element 151 ist eingerichtet, ein über die Sendedatenleitung 152 empfangenes Telegramm und gegebenenfalls über die erste Kontrollleitung 153 empfangene Kontrollsignale nach dem "First-in-first-out"-Prinzip an die Kodiereinheit 121 weiterzugeben. Der zweite passive Teilnehmer 200 weist ein zweites FIFO-Element 251 auf. Das zweite FIFO-Element 251 ist mit einer Empfangsdatenleitung 252 und eine zweite Kontrollleitung 253 auf. Das zweite FIFO-Element 251 ist eingerichtet, ein von der Dekodiereinheit 221 empfangenes Telegramm über die Empfangsdatenleitung 252 gegebenenfalls empfangene Kontrollsignale über die zweite Kontrollleitung 253 nach dem "First-in-first-out"-Prinzip weiterzugeben.

Es kann vorgesehen sein, dass der erste Sendeanschluss 101, der zweite Sendeanschluss 102, der erste Empfangsanschluss 201 und der zweite Empfangsanschluss 202 als Klemmen ausgestaltet sind, wobei die erste Doppelleitung 11 und die zweite Doppelleitung 12 jeweils als Kabelverbindung ausgestaltet sind. In diesem Fall können der erste passive Teilnehmer 100 und der zweite passive Teilnehmer 200 in unterschiedlichen Gehäusen angeordnet sein.

Alternativ kann auch vorgesehen sein, dass der erste Sendeanschluss 101, der zweite Sendeanschluss 102, der erste Empfangsanschluss 201, der zweite Empfangsanschluss 202, die erste Doppelleitung 11 und die zweite Doppelleitung 12 als Leiterbahnen auf einer Leiterkarte ausgestaltet sind. In diesem Fall können der erste passive Teilnehmer 100 und der zweite passive Teilnehmer 200 in einem gemeinsamen Gehäuse angeordnet sein.

Innerhalb des ersten Teilnehmers 100 können die beteiligten Komponenten, also das erste Sende-SERDES-Element 111, das zweite Sende-SERDES-Element 112, die Kodiereinheit 121, der erste Phasenregler 131 und das erste FIFO-Element 151 ganz oder teilweise innerhalb eines programmierbaren Logikgatters (engl. field programmable gate array, FPGA) angeordnet sein. Innerhalb des zweiten Teilnehmers 200 können die beteiligten Komponenten, also das erste Empfangs-SERDES-Element 211, das zweite Empfangs-SERDES-Element 212, die Dekodiereinheit 221, der zweite Phasenregler 231, die Taktrückgewinnungseinheit 234, das erste Verzögerungselement 241, das zweite Verzögerungselement 242 und das zweite FIFO-Element 251 ganz oder teilweise innerhalb eines programmierbaren Logikgatters angeordnet sein. Statt des programmierbaren Logikgatters kann für den ersten passiven Teilnehmer 100 und für den zweiten passiven Teilnehmer 200 auch eine anwendungsspezifische integrierte Schaltung (engl. application-specific integrated circuit, ASIC) verwendet werden.

Fig. 2 zeigt übereinander angeordnet einen Sende-Empfangs-Takt 301, Nutzdaten 310, einen Abtasttakt 302 und einen synchronen Takt 303, jeweils während der Durchführung des Verfahrens zur Kommunikation zwischen dem ersten passiven Teilnehmer 100 und dem zweiten passiven Teilnehmer 200 des Bussystems 1. Der Sende-Empfangs-Takt 301 umfasst dabei die Bitfolge 1111100000, also fünfmal den Bitwert 1 gefolgt von fünfmal den Bitwert 0. Ein aus zehn Bits bestehendes Sendedatenwort 311 wird synchron zum Sende-Empfangs-Takt 301 als Teil der Nutzdaten 310 ausgegeben. Der synchrone Takt 303 ist zum Sende-Empfangs-Takt 301 um 18 Grad phasenverschoben, da so erreicht werden kann, dass die Nutzdaten 310 immer in den Datenaugen abgetastet werden. Der Abtasttakt 302 weist eine im Vergleich zum Sende-Empfangs-Takt 301 beziehungsweise synchronen Takt 303 fünffache Frequenz auf, wobei dann sowohl an den steigenden Flanken 304 als auch an den fallenden Flanken 305 eine Abtastung der Nutzdaten 310 erfolgt.

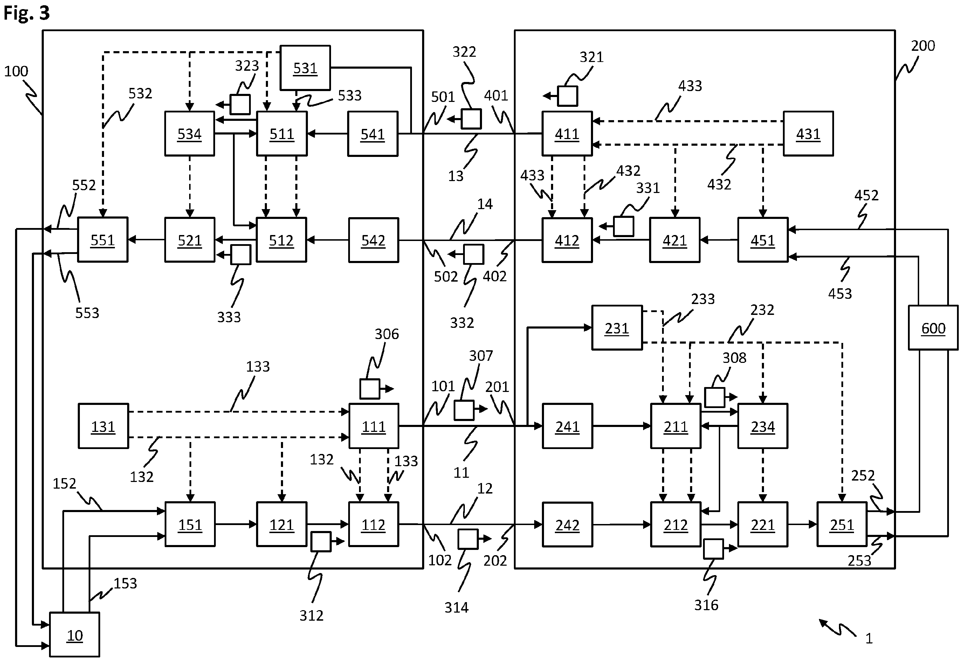

Fig. 3 zeigt ein Bussystem 1, das dem Bussystem 1 der Fig. 1 entspricht, sofern im Folgenden keine Unterschiede beschrieben sind. Der zweite passive Teilnehmer 200 weist einen weiteren ersten Sendeanschluss 401 für eine weitere erste differentielle Doppelleitung 13, einen weiteren zweiten Sendeanschluss 402 für eine weitere zweite differentielle Doppelleitung 14, ein weiteres erstes Sende-SERDES-Element 411 und ein weiteres zweites Sende-SERDES-Element 412 auf. Der zweite passive Teilnehmer 200 ist eingerichtet, ein aus der vorgegebenen Bitlänge bestehendes weiteres originales statisches Muster 321 im weiteren ersten Sende-SERDES-Element 411 zu kodieren und über den weiteren ersten Sendeanschluss 401 als weitere kodierte statische Muster 322 zu senden, wobei das weitere originale statische Muster 321 einen weiteren Sende-Empfangs-Takt definiert. Ferner ist der zweite passive Teilnehmer 200 eingerichtet, weitere originale Nutzdaten 331 zeitlich synchronisiert zum weiteren originalen statischen Muster 321 im weiteren zweiten Sende-SERDES-Element 412 zu kodieren und über den weiteren zweiten Sendeanschluss 402 als weitere kodierte Nutzdaten 332 zu senden, wobei die weiteren originalen Nutzdaten 332 ein weiteres Sendedatenwort mit der vorgegebenen Bitlänge umfassen. Der erste passive Teilnehmer 100 weist einen weiteren ersten Empfangsanschluss 501 für die weitere erste differentielle Doppelleitung 13, einen weiteren zweiten Empfangsanschluss 502 für die weitere zweite differentielle Doppelleitung 14, ein weiteres erstes Empfangs-SERDES-Element 511 und ein weiteres zweites Empfangs-SERDES-Element 512 auf. Der erste passive Teilnehmer 100 ist eingerichtet, das weitere kodierte statische Muster 322 über den weiteren ersten Empfangsanschluss 501 zu empfangen und die weiteren kodierten Nutzdaten 332 über den weiteren zweiten Empfangsanschluss 502 zu empfangen. Der erste passive Teilnehmer 100 ist eingerichtet, aus dem weiteren kodierten statischen Muster 322 einen weiteren Abtasttakt und einen zum weiteren Sende-Empfangs-Takt weiteren synchronen Takt zu generieren, wobei der weitere Abtasttakt einen weiteren ersten Phasenversatz zum weiteren Sende-Empfangs-Takt aufweist und der weitere synchrone Takt einen weiteren zweiten Phasenversatz zum weiteren Sende-Empfangs-Takt aufweist. Der weitere Abtasttakt und der weitere synchrone Takt können dabei Teil eines weiteren dekodierten statischen Musters 323 sein. Der erste passive Teilnehmer 100 ist eingerichtet, das weitere kodierte statische Muster 322 mittels des weiteren ersten Empfangs-SERDES-Elements 511 zu dekodieren und so das weitere dekodierte statische Muster 323 zu erhalten und ferner eingerichtet, die weiteren kodierten Nutzdaten 332 mittels des weiteren zweiten Empfangs-SERDES-Elements 512 zu dekodieren und so ein weiteres Empfangsdatenwort als Teil von weiteren dekodierten Nutzdaten 333 zu erhalten. Das weitere erste Empfangs-SERDES-Element 511 und das weitere zweite Empfangs-SERDES-Element 512 können anhand des weiteren Abtasttakts betrieben werden, wobei das weitere Empfangsdatenwort synchron zum weiteren synchronen Takt ausgegeben werden kann.

Ferner ist in Fig. 3 dargestellt, dass der zweite passive Teilnehmer 200 optional einen weiteren ersten Phasenregler 431, eine weitere erste Taktleitung 432, eine weitere zweite Taktleitung 433, ein weiteres erstes FIFO-Element 451, eine weitere Sendedatenleitung 452 und eine weitere erste Kontrollleitung 453 aufweist, die analog zum ersten Phasenregler 131, zur ersten Taktleitung 132, zur zweiten Taktleitung 132, zum ersten FIFO-Element 151, zur ersten Sendedatenleitung 152 beziehungsweise zur ersten Kontrollleitung 153 des ersten passiven Teilnehmers 100 ausgestaltet sein können und identische Funktionen übernehmen können. Außerdem umfasst der erste passive Teilnehmer 100 einen weiteren zweiten Phasenregler 531, eine weitere dritte Taktleitung 532, eine weitere vierte Taktleitung 533, eine weitere Taktrückgewinnungseinheit 534, ein weiteres erstes Verzögerungselement 541, ein weiteres zweites Verzögerungselement 542, ein weiteres zweites FIFO-Element 551, eine weitere Empfangsdatenleitung 552 und eine weitere zweite Kontrollleitung 553, die analog zum zweiten Phasenregler 231, zur dritten Taktleitung 232, zur vierten Taktleitung 233, zur Taktrückgewinnungseinheit 234, zum ersten Verzögerungselement 241, zum zweiten Verzögerungselement 242, zum zweiten FIFO-Element 251, zur Empfangsdatenleitung 252 beziehungsweise zur zweiten Kontrollleitung 253 ausgestaltet sein können identische Funktionen übernehmen können.

Somit erfolgt im Bussystem 1 der Fig. 3 eine Kommunikation vom ersten passiven Teilnehmer 100 zum zweiten passiven Teilnehmer 200 über die erste differentielle Doppelleitung 11 und die zweite differentielle Doppelleitung 12, während eine Kommunikation vom zweiten passiven Teilnehmer 200 zum ersten passiven Teilnehmer 100 über die weitere erste differentielle Doppelleitung 13 und die weitere zweite differentielle Doppelleitung 14 erfolgt. Ebenfalls in Fig. 3 dargestellt ist ein weiterer passiver Teilnehmer 600 des Bussystems 1, wobei die Empfangsdatenleitung 252 und die zweite Kontrollleitung 253 über den weiteren passiven Teilnehmer 600 zur weiteren Sendedatenleitung 452 und zur weiteren ersten Kontrollleitung 453 geführt ist. Die weitere Empfangsdatenleitung 552 und die weitere zweite Kontrollleitung 553 sind mit dem aktiven Teilnehmer 10 verbunden. Ein vom aktiven Teilnehmer 10 ausgesendetes Datentelegramm kann also vom ersten passiven Teilnehmer 100 zum zweiten passiven Teilnehmer 200 über die erste differentielle Doppelleitung 11 und die zweite differentielle Doppelleitung 12 übertragen werden, anschließend den weiteren passiven Teilnehmer 600 (oder auch mehrere, nicht in Fig. 3 dargestellte weitere passive Teilnehmer) durchlaufen und anschließend von zweiten passiven Teilnehmer 200 zum ersten passiven Teilnehmer 100 über die weitere erste differentielle Doppelleitung 13 und die weitere zweite differentielle Doppelleitung 14 übertragen werden. Vom ersten passiven Teilnehmer 100 erreicht das Datentelegramm dann wieder den aktiven Teilnehmer 10. Somit ist eine dem EtherCAT-Standard entsprechende Kommunikationsstruktur möglich.

Dabei kann insbesondere vorgesehen sein, dass der Sende-Empfangs-Takt 301 und der weitere Sende-Empfangs-Takt eine gleiche Frequenz aufweisen. Ferner ist ebenfalls möglich, dass der Abtasttakt 302 und der weitere Abtasttakt eine gleiche Frequenz aufweisen.

### Bezugszeichenliste

- 1: Bussystem
- 10: aktiver Teilnehmer
- 11: erste differentielle Doppelleitung
- 12: zweite differentielle Doppelleitung
- 13: weitere erste differentielle Doppelleitung
- 14: weitere zweite differentielle Doppelleitung
- 100: erster passiver Teilnehmer
- 101: erster Sendeanschluss
- 102: zweiter Sendeanschluss
- 111: erstes Sende-SERDES-Element
- 112: zweites Sende-SERDES-Element
- 121: Kodiereinheit
- 131: erster Phasenregler
- 132: erste Taktleitung
- 133: zweite Taktleitung
- 151: erstes FIFO-Element
- 152: Sendedatenleitung
- 153: erste Kontrollleitung

- 200: zweiter passiver Teilnehmer
- 201: erster Empfangsanschluss
- 202: zweiter Empfangsanschluss
- 211: erstes Empfangs-SERDES-Element
- 212: zweites Empfangs-SERDES-Element
- 221: Dekodiereinheit
- 231: zweiter Phasenregler
- 232: dritte Taktleitung
- 233: vierte Taktleitung
- 234: Taktrückgewinnungseinheit
- 241: erstes Verzögerungselement
- 242: zweites Verzögerungselement
- 251: zweites FIFO-Element
- 252: Empfangsdatenleitung
- 253: zweite Kontrollleitung

- 301: Sende-Empfangs-Takt
- 302: Abtasttakt
- 303: synchroner Takt
- 304: steigende Flanke
- 305: fallende Flanke
- 306: originales statisches Muster
- 307: kodiertes statisches Muster
- 308: dekodiertes statisches Muster
- 310: Nutzdaten
- 311: Sendedatenwort
- 312: originale Nutzdaten
- 314: kodierte Nutzdaten
- 316: dekodierte Nutzdaten
- 321: weiteres originales statisches Muster
- 322: weiteres kodiertes statisches Muster
- 323: weiteres dekodiertes statisches Muster
- 331: weitere originale Nutzdaten
- 332: weitere kodierte Nutzdaten
- 333: weitere dekodierte Nutzdaten

- 401: weiterer erster Sendeanschluss
- 402: weiterer zweiter Sendeanschluss
- 411: weiteres erstes Sende-SERDES-Element
- 412: weiteres zweites Sende-SERDES-Element
- 421: weitere Kodiereinheit
- 431: weiterer erster Phasenregler
- 432: weitere erste Taktleitung
- 433: weitere zweite Taktleitung
- 451: weiteres erstes FIFO-Element
- 452: weitere Sendedatenleitung
- 453: weitere erste Kontrollleitung

- 501: weiterer erster Empfangsanschluss
- 502: weiterer zweiter Empfangsanschluss
- 511: weiteres erstes Empfangs-SERDES-Element
- 512: weiteres zweites Empfangs-SERDES-Element
- 521: weitere Dekodiereinheit
- 531: weiterer zweiter Phasenregler
- 532: weitere dritte Taktleitung
- 533: weitere vierte Taktleitung
- 534: weitere Taktrückgewinnungseinheit
- 541: weiteres erstes Verzögerungselement
- 542: weiteres zweites Verzögerungselement
- 551: weiteres zweites FIFO-Element
- 552: weitere Empfangsdatenleitung
- 553: weitere zweite Kontrollleitung

- 600: weiterer passiver Teilnehmer

## Patentansprüche

1. Verfahren zur Kommunikation zwischen einem ersten passiven Teilnehmer (100) und einem zweiten passiven Teilnehmer (200) eines Bussystems (1), wobei für die Kommunikation eine erste differentielle Doppelleitung (11) und eine zweite differentielle Doppelleitung (12) genutzt werden, wobei über die erste differentielle Doppelleitung (11) ein originales statisches Muster (306) mit einer vorgegebenen Bit-länge übertragen wird, wobei das originale statische Muster (306) einen Sende-Empfangs-Takt (301) definiert, wobei über die zweite differentielle Doppelleitung (12) originale Nutzdaten (312) übertragen werden, wobei die originalen Nutzdaten (312) ein Sendedatenwort (311) mit der vorgegebenen Bitlänge umfassen, wobei der erste passive Teilnehmer (100) das originale statische Muster (306) in einem ersten Sende-SERDES-Element (111) kodiert und über die erste differentielle Doppelleitung (11) als kodiertes statisches Muster (307) an den zweiten passiven Teilnehmer (200) sendet und die originalen Nutzdaten (312) zeitlich synchronisiert zum originalen statischen Muster (306) in einem zweiten Sende-SERDES-Element (112) kodiert und über die zweite differentielle Doppelleitung (12) als kodierte Nutzdaten (314) an den zweiten passiven Teilnehmer (200) sendet, wobei der zweite passive Teilnehmer (200) das kodierte statische Muster (307) und die kodierten Nutzdaten (314) empfängt, wobei der zweite passive Teilnehmer (200) aus dem kodierten statischen Muster (307) einen Abtasttakt (302) und einen zum Sende-Empfangs-Takt (301) synchronen Takt (303) generiert, wobei der Abtasttakt (302) einen ersten Phasenversatz zum Sende-Empfangs-Takt (301) aufweist, wobei der synchrone Takt (303) einen zweiten Phasenversatz zum Sende-Empfangs-Takt (301) aufweist, wobei der zweite passive Teilnehmer (200) das kodierte statische Muster (307) mittels eines ersten Empfangs-SERDES-Elements (211) dekodiert und die kodierten Nutzdaten (314) mittels eines zweiten Empfangs-SERDES-Elements (212) dekodiert und so ein Empfangsdatenwort erhält, wobei das erste Empfangs-SERDES-Element (211) und das zweite Empfangs-SERDES-Element (212) anhand des Abtasttakts (302) betrieben werden, wobei das Empfangsdatenwort synchron zum synchronen Takt (303) ausgegeben wird.

2. Verfahren nach Anspruch 1, wobei der Sende-Empfangs-Takt (301) einem Zehntel einer über die erste differentielle Doppelleitung (11) beziehungsweise über die zweite differentielle Doppelleitung (12) übertragenen Datenrate entspricht.

3. Verfahren nach Anspruch 1 oder 2, wobei der Abtasttakt (302) der über die erste differentielle Doppelleitung (11) beziehungsweise über die zweite differentielle Doppelleitung (12) übertragenen Datenrate entspricht oder der Hälfte der über die erste differentielle Doppelleitung (11) beziehungsweise über die zweite differentielle Doppelleitung (12) übertragenen Datenrate entspricht.

4. Verfahren nach einem der Ansprüche 1 bis 3, wobei der erste Phasenversatz 90 Grad beträgt.

5. Verfahren nach einem der Ansprüche 1 bis 4, wobei der zweite Phasenversatz 18 Grad beträgt.

6. Verfahren nach einem der Ansprüche 1 bis 5, wobei das statische Muster eine erste Anzahl an ersten Bits mit dem Bitwert 1 und eine zweite Anzahl an zweiten Bits mit dem Bitwert 0 umfasst, wobei im statischen Muster zunächst die ersten Bits und dann die zweiten Bits angeordnet sind, wobei die erste Anzahl und die zweite Anzahl zusammen der Bitlänge entspricht.

7. Verfahren nach einem der Ansprüche 1 bis 6, wobei das durch das erste Empfangs-SERDES-Element (211) dekodierte statische Muster (308) mittels eines ersten Schieberegisters geschoben wird, bis an einer Ausgabe des ersten Empfangs-SERDES-Elements (211) das originale statische Muster (306) ausgegeben wird und wobei das durch das zweite Empfangs-SERDES-Element (212) dekodierte Empfangsdatenwort mittels eines zweiten Schieberegisters um eine zum ersten Schieberegister identische Anzahl von Bits geschoben wird.

8. Verfahren nach einem der Ansprüche 1 bis 7, wobei das kodierte statische Muster (307) im zweiten passiven Teilnehmer (200) durch ein erstes Verzögerungselement (241) verzögert wird und die kodierte Nutzdaten (314) durch ein zweites Verzögerungselement (242) verzögert werden, wobei bei einer Initialisierung zunächst die Verzögerung des ersten Verzögerungselements (241) und des zweiten Verzögerungselements (242) schrittweise reduziert wird und überprüft wird, ob sich ein abgetastetes Taktmuster verändert und so eine untere Grenze für die Verzögerung ermittelt wird, anschließend die Verzögerung des ersten Verzögerungselements (241) und des zweiten Verzögerungselements (242) schrittweise erhöht wird und überprüft wird, ob sich ein abgetastetes Taktmuster verändert und so eine obere Grenze für die Verzögerung ermittelt wird und anschließend die Verzögerung des ersten Verzögerungselements (241) und des zweiten Verzögerungselements (242) auf einen Mittelwert aus unterer Grenze und oberer Grenze eingestellt wird.

9. Verfahren nach einem der Ansprüche 1 bis 8, wobei die Nutzdaten (310) mittels 8b10b-Kodierung kodiert und dekodiert werden, wobei die vorgegebene Bitlänge 10 Bits entspricht.

10. Bussystem (1) mit einem ersten passiven Teilnehmer (100) und einem zweiten passiven Teilnehmer (200), wobei der erste passive Teilnehmer (100) einen ersten Sendeanschluss (101) für eine erste differentielle Doppelleitung (11), einen zweiten Sendeanschluss (102) für eine zweite differentielle Doppelleitung (12), ein erstes Sende-SERDES-Element (111) und ein zweites Sende-SERDES-Element (112) aufweist, wobei der erste passive Teilnehmer (100) eingerichtet ist, ein originales statisches Muster (306) mit einer vorgegebenen Bitlänge im ersten Sende-SERDES-Element (111) zu kodieren und über den ersten Sendeanschluss (101) als kodiertes statisches Muster (307) zu senden, wobei das originale statische Muster (306) einen Sende-Empfangs-Takt (301) definiert, und ferner eingerichtet ist, originale Nutzdaten (312) zeitlich synchronisiert zum originalen statischen Muster (306) im zweiten Sende-SERDES-Element (112) zu kodieren und über den zweiten Sendeanschluss (102) als kodierte Nutzdaten (314) zu senden, wobei die originalen Nutzdaten (312) ein Sendedatenwort (311) mit der vorgegebenen Bitlänge umfassen, wobei der zweite passive Teilnehmer (200) einen ersten Empfangsanschluss (201) für eine erste differentielle Doppelleitung (11), einen zweiten Empfangsanschluss (202) für eine zweite differentielle Doppelleitung (12), ein erstes Empfangs-SERDES-Element (211) und ein zweites Empfangs-SERDES-Element (212) aufweist, wobei der zweite passive Teilnehmer (200) eingerichtet ist, ein kodiertes statisches Muster (307) mit einer vorgegebenen Bitlänge über den ersten Empfangsanschluss (201) zu empfangen und kodierte Nutzdaten (314) mit der vorgegebenen Bitlänge über den zweiten Empfangsanschluss (202) zu empfangen, wobei der zweite passive Teilnehmer (200) eingerichtet ist, aus dem kodierten statischen Muster (307) einen Abtasttakt (302) und einen zu einem Sende-Empfangs-Takt (301) synchronen Takt (303) zu generieren, wobei der Abtasttakt (302) einen ersten Phasenversatz zum Sende-Empfangs-Takt (301) aufweist, wobei der synchrone Takt (303) einen zweiten Phasenversatz zum Sende-Empfangs-Takt (301) aufweist, wobei der zweite passive Teilnehmer (200) eingerichtet ist, das kodierte statische Muster (307) mittels des ersten Empfangs-SERDES-Elements (211) zu dekodieren und die kodierten Nutzdaten (314) mittels des zweiten Empfangs-SERDES-Elements (212) zu dekodieren und so ein Empfangsdatenwort zu erhalten, wobei das erste Empfangs-SERDES-Element (211) und das zweite Empfangs-SERDES-Element (212) anhand des Abtasttakts (302) betrieben werden können, wobei das Empfangsdatenwort synchron zum synchronen Takt (303) ausgegeben werden kann.

11. Bussystem (1) nach Anspruch 10, wobei der zweite passive Teilnehmer (200) eingerichtet ist, das durch das erste Empfangs-SERDES-Element (211) dekodierte statische Muster (308) mittels eines ersten Schieberegisters zu schieben, bis an einer Ausgabe des ersten Empfangs-SERDES-Elements (211) das originale statische Muster (306) ausgegeben wird und wobei das durch das zweite Empfangs-SERDES-Element (212) dekodierte Empfangsdatenwort mittels eines zweiten Schieberegisters um eine zum ersten Schieberegister identische Anzahl von Bits zu schieben.

12. Bussystem (1) nach Anspruch 10 oder 11, ferner aufweisend ein erstes Verzögerungselement (241) zwischen dem ersten Empfangseingang (201) und dem ersten Empfänger-SERDES-Element (211) und ein zweites Verzögerungselement (242) zwischen dem zweiten Empfangseingang (202) und dem zweiten Empfänger-SERDES-Element (212), wobei das kodierte statische Muster (307) durch das erste Verzögerungselement (241) verzögert werden kann und die kodierte Nutzdaten (314) durch das zweite Verzögerungselement (242) verzögert werden können, wobei der zweite passive Teilnehmer (200) eingerichtet ist, bei einer Initialisierung zunächst die Verzögerung des ersten Verzögerungselements (241) und des zweiten Verzögerungselements (242) schrittweise zu reduzieren und zu überprüfen, ob sich ein abgetastetes Taktmuster verändert und so eine untere Grenze für die Verzögerung zu ermitteln, anschließend die Verzögerung des ersten Verzögerungselements (241) und des zweiten Verzögerungselements (242) schrittweise zu erhöhen und zu überprüfen, ob sich ein abgetastetes Taktmuster verändert und so eine obere Grenze für die Verzögerung zu ermitteln und anschließend die Verzögerung des ersten Verzögerungselements (241) und des zweiten Verzögerungselements (242) auf einen Mittelwert aus unterer Grenze und oberer Grenze einzustellen.

13. Bussystem (1) nach einem der Ansprüche 10 bis 12, wobei der zweite passive Teilnehmer (200) einen weiteren ersten Sendeanschluss (401) für eine weitere erste differentielle Doppelleitung (13), einen weiteren zweiten Sendeanschluss (402) für eine weitere zweite differentielle Doppelleitung (14), ein weiteres erstes Sende-SERDES-Element (411) und ein weiteres zweites Sende-SERDES-Element (412) aufweist, wobei der zweite passive Teilnehmer (200) eingerichtet ist, ein aus der vorgegebenen Bitlänge bestehendes weiteres originales statisches Muster (321) im weiteren ersten Sende-SERDES-Element (411) zu kodieren und über den weiteren ersten Sendeanschluss (401) als weiteres kodiertes statisches Muster (322) zu senden, wobei das weitere originale statische Muster (321) einen weiteren Sende-Empfangs-Takt definiert, und ferner eingerichtet ist, weitere originale Nutzdaten (331) zeitlich synchronisiert zum weiteren originalen statischen Muster (321) im weiteren zweiten Sende-SERDES-Element (412) zu kodieren und über den weiteren zweiten Sendeanschluss (402) als weitere kodierte Nutzdaten (332) zu senden, wobei die weiteren originalen Nutzdaten (331) ein weiteres Sendedatenwort mit der vorgegebenen Bitlänge umfassen, wobei der erste passive Teilnehmer (100) einen weiteren ersten Empfangsanschluss (501) für die weitere erste differentielle Doppelleitung (13), einen weiteren zweiten Empfangsanschluss (502) für die weitere zweite differentielle Doppelleitung (14), ein weiteres erstes Empfangs-SERDES-Element (511) und ein weiteres zweites Empfangs-SERDES-Element (512) aufweist, wobei der erste passive Teilnehmer (100) eingerichtet ist, das weitere kodierte statisches Muster (322) über den weiteren ersten Empfangsanschluss (501) zu empfangen und die weiteren kodierten Nutzdaten (332) über den weiteren zweiten Empfangsanschluss (502) zu empfangen, wobei der erste passive Teilnehmer (100) eingerichtet ist, aus dem weiteren kodierten statischen Muster (322) einen weiteren Abtasttakt und einen zum weiteren Sende-Empfangs-Takt weiteren synchronen Takt zu generieren, wobei der weitere Abtasttakt einen weiteren ersten Phasenversatz zum weiteren Sende-Empfangs-Takt aufweist, wobei der weitere synchrone Takt einen weiteren zweiten Phasenversatz zum weiteren Sende-Empfangs-Takt aufweist, wobei der erste passive Teilnehmer (100) eingerichtet ist, das weitere kodierte statische Muster (322) mittels des weiteren ersten Empfangs-SERDES-Elements (511) zu dekodieren und die weiteren kodierten Nutzdaten (332) mittels des weiteren zweiten Empfangs-SERDES-Elements (512) zu dekodieren und so ein weiteres Empfangsdatenwort zu erhalten, wobei das weitere erste Empfangs-SERDES-Element (511) und das weitere zweite Empfangs-SERDES-Element (512) anhand des weiteren Abtasttakts betrieben werden können, wobei das weitere Empfangsdatenwort synchron zum weiteren synchronen Takt ausgegeben werden kann.

## Claims

1. A method for communicating between a first passive subscriber (100) and a second passive subscriber (200) of a bus system (1), wherein a first differential double line (11) and a second differential double line (12) are used for the communication, wherein an original static pattern (306) with a predetermined bit length is transmitted via the first differential double line (11), wherein the original static pattern (306) defines a transmit-receive clock (301), wherein original user data (312) are transmitted via the second differential double line (12), wherein the original user data (312) comprise a transmit data word (311) having the predetermined bit length, wherein the first passive subscriber (100) encodes the original static pattern (306) in a first transmit SERDES element (111) and transmits it via the first differential double line (11) as an encoded static pattern (307) to the second passive subscriber (200), and encodes the original user data (312) synchronized in time with the original static pattern (306) in a second transmit SERDES element (112) and transmits it via the second differential double line (12) to the second passive subscriber (200) as encoded user data (314), wherein the second passive subscriber (200) receives the encoded static pattern (307) and the encoded user data (314), wherein the second passive subscriber (200) generates a sampling clock (302) and a clock (303) synchronous to the transmit-receive clock (301) from the encoded static pattern (307), wherein the sampling clock (302) comprises a first phase offset with regard to the transmit-receive clock (301), wherein the synchronous clock (303) comprises a second phase offset with regard to the transmit-receive clock (301), wherein the second passive subscriber (200) decodes the encoded static pattern (307) with the aid of a first receive SERDES element (211) and decodes the encoded user data (314) with the aid of a second receive SERDES element (212), thus obtaining a receive data word, wherein the first receive SERDES element (211) and the second receive SERDES element (212) are operated based on the sampling clock (302), wherein the receive data word is output synchronously with the synchronous clock (303).

2. The method according to claim 1, wherein the transmit-receive clock (301) corresponds to one-tenth of a data rate transmitted over the first differential dual line (11) or the second differential dual line (12), respectively.

3. The method according to claim 1 or 2, wherein the sampling clock (302) corresponds to the data rate transmitted via the first differential double line (11) or via the second differential double line (12), respectively, or corresponds to half of the data rate transmitted via the first differential double line (11) or via the second differential double line (12), respectively.

4. The method according to any one of claims 1 to 3, wherein the first phase offset is 90 degrees.

5. The method according to any one of claims 1 to 4, wherein the second phase offset is 18 degrees.

6. The method according to any one of claims 1 to 5, wherein the static pattern comprises a first number of first bits having a bit value of 1 and a second number of second bits having a bit value of 0, wherein in the static pattern, the first bits are arranged first and then the second bits are arranged, wherein the first number and the second number jointly correspond to the bit length.

7. The method according to any one of claims 1 to 6, wherein the static pattern (308) decoded by the first receive SERDES element (211) is shifted with the aid of a first shift register until the original static pattern (306) is output at an output of the first receive SERDES element (211), and wherein the receive data word decoded by the second receive SERDES element (212) is shifted with the aid of a second shift register by a number of bits identical to the first shift register.

8. The method according to any one of claims 1 to 7, wherein the encoded static pattern (307) in the second passive subscriber (200) is delayed by a first delay element (241) and the encoded user data (314) are delayed by a second delay element (242), wherein, during an initialization, the delay of the first delay element (241) and of the second delay element (242) is first gradually reduced and it is checked whether a sampled clock pattern changes and thus a lower limit for the delay is determined, subsequently increasing the delay of the first delay element (241) and the second delay element (242) in a stepwise manner and checking whether a sampled clock pattern changes and thus an upper limit for the delay is determined, and subsequently setting the delay of the first delay element (241) and the second delay element (242) to an average value of the lower limit and the upper limit.

9. The method according to any one of claims 1 to 8, wherein the user data (310) is encoded and decoded using 8b10b encoding, wherein the predetermined bit length corresponds to 10 bits.

10. A bus system (1) comprising a first passive subscriber (100) and a second passive subscriber (200), wherein the first passive subscriber (100) comprises a first transmit connection (101) for a first differential double line (11), a second transmit connection (102) for a second differential double line (12), a first transmit SERDES element (111) and a second transmit SERDES element (112), wherein the first passive subscriber (100) is set up to encode an original static pattern (306) having a predetermined bit length in the first transmit SERDES element (111) and to transmit it as an encoded static pattern (307) via the first transmit connection (101), wherein the original static pattern (306) defines a transmit-receive clock (301), and is further set up to encode original user data (312) in a time-synchronized manner with the original static pattern (306) in the second transmit SERDES element (112) and to transmit it via the second transmit connection (102) as encoded user data (314), wherein the original user data (312) comprise a transmit data word (311) having the predetermined bit length, wherein the second passive subscriber (200) comprises a first receive connection (201) for a first differential double line (11), a second receive connection (202) for a second differential double line (12), a first receive SERDES element (211) and a second receive SERDES element (212), wherein the second passive subscriber (200) is set up to receive an encoded static pattern (307) having a predetermined bit length via the first receive connection (201) and to receive encoded user data (314) having the predetermined bit length via the second receive connection (202), wherein the second passive subscriber (200) is set up to generate a sampling clock (302) and a clock (303) synchronous with a transmit-receive clock (301) from the encoded static pattern (307), the sampling clock (302) having a first phase offset with respect to the transmit-receive clock (301), the synchronous clock (303) having a second phase offset with respect to the transmit-receive clock (301), wherein the second passive subscriber (200) is set up to decode the encoded static pattern (307) with the aid of the first receive SERDES element (211) and to decode the encoded user data (314) with the aid of the second receive SERDES element (212) to thus obtain a receive data word, wherein the first receive SERDES element (211) and the second receive SERDES element (212) are operable based on the sampling clock (302), wherein the receive data word is output synchronously with the synchronous clock (303).

11. The bus system (1) according to claim 10, wherein the second passive subscriber (200) is set up to shift the static pattern (308) decoded by the first receive SERDES element (211) with the aid of a first shift register, until the original static pattern (306) is output at an output of the first receive SERDES element (211), and to shift the receive data word decoded by the second receive SERDES element (212) by a number of bits identical to the first shift register with the aid of a second shift register.

12. The bus system (1) according to claim 10 or 11, further comprising a first delay element (241) between the first receive input (201) and the first receiver SERDES element (211) and a second delay element (242) between the second receive input (202) and the second receiver SERDES element (212), wherein the encoded static pattern (307) may be delayed by the first delay element (241) and the encoded user data (314) may be delayed by the second delay element (242), wherein the second passive subscriber (200) is set up, during an initialization, to first reduce the delay of the first delay element (241) and of the second delay element (242) in a stepwise manner and to check whether a sampled clock pattern changes and thus determining a lower limit for the delay, subsequently to increase the delay of the first delay element (241) and of the second delay element (242) in a stepwise manner and to check whether a sampled clock pattern changes, thus determining an upper limit for the delay, and subsequently to set the delay of the first delay element (241) and the second delay element (242) to an average value of the lower limit and the upper limit.

13. The bus system (1) according to any one of claims 10 to 12, wherein the second passive subscriber (200) comprises a further first transmit connection (401) for a further first differential double line (13), a further second transmit connection (402) for a further second differential double line (14), a further first transmit SERDES element (411) and a further second transmit SERDES element (412), wherein the second passive subscriber (200) is set up to encode a further original static pattern (321) consisting of the predetermined bit length in the further first transmit SERDES element (411) and to transmit it as a further encoded static pattern (322) via the further first transmit connection (401), wherein the further original static pattern (321) defines a further transmit-receive clock, and is further set up to encode further original user data (331) in a time-synchronized manner with the further original static pattern (321) in the further second transmit-SERDES element (412) and to transmit it as further encoded user data (332) via the further second transmit connection (402), the further original user data (331) comprising a further transmit data word having the predetermined bit length, the first passive subscriber (100) comprising a further first receive connection (501) for the further first differential double line (13), a further second receive connection (502) for the further second differential double line (14), a further first receive SERDES element (511) and a further second receive SERDES element (512), wherein the first passive subscriber (100) is set up to receive the further encoded static pattern (322) via the further first receive connection (501) and to receive the further encoded user data (332) via the further second receive connection (502), wherein the first passive subscriber (100) is set up to generate a further sampling clock and a further synchronous clock to the further transmit-receive clock from the further encoded static pattern (322), the further sampling clock having a further first phase offset with regard to the further transmit-receive clock, wherein the further synchronous clock has a further second phase offset to the further transmit-receive clock, wherein the first passive subscriber (100) is set up to decode the further encoded static pattern (322) with the aid of the further first receive-SERDES element (511) and to decode the further encoded user data (332) with the aid of the further second receive-SERDES element (512) and thus to obtain a further receive data word, wherein the further first receive SERDES element (511) and the further second receive SERDES element (512) may be operated based on the further sampling clock, wherein the further receive data word may be output synchronously with the further synchronous clock.

## Revendications

1. Procédé permettant de communiquer entre un premier abonné passif (100) et un deuxième abonné passif (200) d'un système de bus (1), dans lequel une première ligne double différentielle (11) et une deuxième ligne double différentielle (12) sont utilisées pour la communication, dans lequel un motif statique original (306) d'une longueur binaire prédéfinie est transmis sur la première ligne double différentielle (11), dans lequel le motif statique original (306) définit une impulsion d'horloge d'émission/réception (301), dans lequel des données utiles originales (312) sont transmises sur la deuxième ligne double différentielle (12), dans lequel les données utiles originales (312) comprennent un mot de données d'émission (311) de la longueur binaire prédéfinie, dans lequel le premier abonné passif (100) code le motif statique original (306) dans un premier élément SERDES d'émission (111) et l'émet sur la première ligne double différentielle (11) en tant que motif statique codé (307) au deuxième abonné passif (200) et code les données utiles originales (312) en synchronisation temporelle avec le motif statique original (306) dans un deuxième élément SERDES d'émission (112) et les émet sur la deuxième ligne double différentielle (12) en tant que données utiles codées (314) au deuxième abonné passif (200), dans lequel le deuxième abonné passif (200) reçoit le motif statique codé (307) et les données utiles codées (314), dans lequel le deuxième abonné passif (200) génère à partir du motif statique codé (307) une impulsion d'horloge d'échantillonnage (302) et une impulsion d'horloge (303) synchronisée avec l'impulsion d'horloge d'émission/réception (301), dans lequel l'impulsion d'horloge d'échantillonnage (302) présente un premier décalage de phase par rapport à l'impulsion d'horloge d'émission/réception (301), dans lequel l'impulsion d'horloge synchrone (303) présente un deuxième décalage de phase par rapport à l'impulsion d'horloge d'émission/réception (301), dans lequel le deuxième abonné passif (200) décode le motif statique codé (307) au moyen d'un premier élément SERDES de réception (211) et décode les données utiles codées (314) au moyen d'un deuxième élément SERDES de réception (212) et obtient ainsi un mot de données de réception, dans lequel le premier élément SERDES de réception (211) et le deuxième élément SERDES de réception (212) fonctionnent à l'aide de l'impulsion d'horloge d'échantillonnage (302), dans lequel le mot de données de réception est sorti en synchronisation avec l'impulsion d'horloge synchrone (303).

2. Procédé selon la revendication 1, dans lequel l'impulsion d'horloge d'émission/réception (301) correspond à un dixième d'un débit de données transmis sur la première ligne double différentielle (11) ou sur la deuxième ligne double différentielle (12), respectivement.

3. Procédé selon la revendication 1 ou 2, dans lequel l'impulsion d'horloge d'échantillonnage (302) correspond au débit de données transmis sur la première ligne double différentielle (11) ou sur la deuxième ligne double différentielle (12), respectivement, ou à la moitié du débit de données transmis sur la première ligne double différentielle (11) ou sur la deuxième ligne double différentielle (12), respectivement.

4. Procédé selon l'une quelconque des revendications 1 à 3, dans lequel le premier décalage de phase est de 90 degrés.

5. Procédé selon l'une quelconque des revendications 1 à 4, dans lequel le deuxième décalage de phase est de 18 degrés.

6. Procédé selon l'une quelconque des revendications 1 à 5, dans lequel le motif statique comprend un premier nombre de premiers bits de la valeur binaire 1 et un deuxième nombre de deuxièmes bits de la valeur binaire 0, dans lequel d'abord les premiers bits et ensuite les deuxièmes bits sont disposés dans le motif statique, le premier nombre et le deuxième nombre correspondant ensemble à la longueur binaire.

7. Procédé selon l'une quelconque des revendications 1 à 6, dans lequel le motif statique (308) décodé par le premier élément SERDES de réception (211) est déplacé au moyen d'un premier registre à décalage jusqu'à que qu'à une sortie du premier élément SERDES de réception (211) le motif statique original (306) soit sorti, et dans lequel le mot de données de réception décodé par le deuxième élément SERDES de réception (212) est déplacé au moyen d'un deuxième registre à décalage d'un nombre de bits identique au premier registre à décalage.

8. Procédé selon l'une quelconque des revendications 1 à 7, dans lequel le motif statique codé (307) dans le deuxième abonné passif (200) est retardé par un premier élément de retard (241), et les données utiles codées (314) sont retardées par un deuxième élément de retard (242), dans lequel lors d'une initialisation, d'abord le retard du premier élément de retard (241) et du deuxième élément de retard (242) est réduit progressivement, et on vérifie si un motif d'impulsion d'horloge échantillonné change, et ainsi une limite inférieure pour le retard est déterminée, ensuite, le retard du premier élément de retard (241) et du deuxième élément de retard (242) est augmenté progressivement, et on vérifie si un motif d'impulsion d'horloge échantillonné change, et ainsi une limite supérieure pour le retard est déterminée, et ensuite le retard du premier élément de retard (241) et du deuxième élément de retard (242) est réglé sur une moyenne de la limite inférieure et de la limite supérieure.

9. Procédé selon l'une quelconque des revendications 1 à 8, dans lequel les données utiles (310) sont codées et décodées au moyen d'un codage 8b10b, la longueur binaire prédéfinie correspondant à 10 bits.

10. Système de bus (1) comprenant un premier abonné passif (100) et un deuxième abonné passif (200), dans lequel le premier abonné passif (100) présente une première borne d'émission (101) pour une première ligne double différentielle (11), une deuxième borne d'émission (102) pour une deuxième ligne double différentielle (12), un premier élément SERDES d'émission (111) et un deuxième élément SERDES d'émission (112), dans lequel le premier abonné passif (100) est conçu pour coder un motif statique original (306) d'une longueur binaire prédéfinie dans le premier élément SERDES d'émission (111), et pour l'émettre par la première borne d'émission (101) en tant que motif statique codé (307), dans lequel le motif statique original (306) définit une impulsion d'horloge d'émission/réception (301), et est en outre conçu pour coder des données utiles originales (312) en synchronisation temporelle avec le motif statique original (306) dans le deuxième élément SERDES d'émission (112) et pour les émettre par la deuxième borne d'émission (102) en tant que données utiles codées (314), dans lequel les données utiles originales (312) comprennent un mot de données d'émission (311) de la longueur binaire prédéfinie, dans lequel le deuxième abonné passif (200) présente une première borne de réception (201) pour une première ligne double différentielle (11), une deuxième borne de réception (202) pour une deuxième ligne double différentielle (12), un premier élément SERDES de réception (211) et un deuxième élément SERDES de réception (212), dans lequel le deuxième abonné passif (200) est conçu pour recevoir un motif statique codé (307) d'une longueur binaire prédéfinie par la première borne de réception (201) et pour recevoir des données utiles codées (314) de la longueur binaire prédéfinie par la deuxième borne de réception (202), dans lequel le deuxième abonné passif (200) est conçu pour générer à partir du motif statique codé (307) une impulsion d'horloge d'échantillonnage (302) et une impulsion d'horloge (303) synchrone avec une impulsion d'horloge d'émission/réception (301), dans lequel l'impulsion d'horloge d'échantillonnage (302) présente un premier décalage de phase par rapport à l'impulsion d'horloge d'émission/réception (301), dans lequel l'impulsion d'horloge synchrone (303) présente un deuxième décalage de phase par rapport à l'impulsion d'horloge d'émission/réception (301), dans lequel le deuxième abonné passif (200) est conçu pour décoder le motif statique codé (307) au moyen du premier élément SERDES de réception (211) et pour décoder les données utiles codées (314) au moyen du deuxième élément SERDES de réception (212) et obtenir ainsi un mot de données de réception, dans lequel le premier élément SERDES de réception (211) et le deuxième élément SERDES de réception (212) peuvent fonctionner à l'aide de l'impulsion d'horloge d'échantillonnage (302), dans lequel le mot de données de réception peut être sorti en synchronisation avec l'impulsion d'horloge synchrone (303) .

11. Système de bus (1) selon la revendication 10, dans lequel le deuxième abonné passif (200) est conçu pour déplacer le motif statique (308) décodé par le premier élément SERDES de réception (211) au moyen d'un premier registre à décalage jusqu'à qu'à une sortie du premier élément SERDES de réception (211) le motif statique original (306) soit sorti, et pour déplacer le mot de données de réception décodé par le deuxième élément SERDES de réception (212) au moyen d'un deuxième registre à décalage d'un nombre de bits identique au premier registre à décalage.

12. Système de bus (1) selon la revendication 10 ou 11, présentant en outre un premier élément de retard (241) entre la première entrée de réception (201) et le premier élément SERDES de réception (211), et un deuxième élément de retard (242) entre la deuxième entrée de réception (202) et le deuxième élément SERDES de réception (212), dans lequel le motif statique codé (307) peut être retardé par le premier élément de retard (241), et les données utiles codées (314) peuvent être retardées par le deuxième élément de retard (242), dans lequel lors d'une initialisation, le deuxième abonné passif (200) est conçu pour d'abord réduire progressivement le retard du premier élément de retard (241) et du deuxième élément de retard (242) et pour vérifier si un motif d'impulsion d'horloge échantillonné change, et pour déterminer ainsi une limite inférieure pour le retard, ensuite pour augmenter progressivement le retard du premier élément de retard (241) et du deuxième élément de retard (242) et pour vérifier si un motif d'impulsion d'horloge échantillonné change, et pour déterminer ainsi une limite supérieure pour le retard, et pour régler ensuite le retard du premier élément de retard (241) et du deuxième élément de retard (242) sur une moyenne de la limite inférieure et de la limite supérieure.

13. Système de bus (1) selon l'une quelconque des revendications 10 à 12, dans lequel le deuxième abonné passif (200) présente une autre première borne d'émission (401) pour une autre première ligne double différentielle (13), une autre deuxième borne d'émission (402) pour une deuxième ligne double différentielle (14), un autre premier élément SERDES d'émission (411) et un autre deuxième élément SERDES d'émission (412), dans lequel le deuxième abonné passif (200) est conçu pour coder un autre motif statique original (321) dans l'autre premier élément SERDES d'émission (411), et pour l'émettre par l'autre première borne d'émission (401) en tant qu'autre motif statique codé (322), dans lequel l'autre motif statique original (321) définit une autre impulsion d'horloge d'émission/réception, et est en outre conçu pour coder d'autres données utiles originales (331) en synchronisation temporelle avec l'autre motif statique original (321) dans l'autre deuxième élément SERDES d'émission (412) et pour les émettre par l'autre deuxième borne d'émission (402) en tant qu'autres données utiles codées (332), dans lequel les autres données utiles originales (331) comprennent un autre mot de données d'émission de la longueur binaire prédéfinie, dans lequel le premier abonné passif (100) présente une autre première borne de réception (501) pour l'autre première ligne double différentielle (13), une autre deuxième borne de réception (502) pour l'autre deuxième ligne double différentielle (14), un autre premier élément SERDES de réception (511) et un autre deuxième élément SERDES de réception (512), dans lequel le premier abonné passif (100) est conçu pour recevoir l'autre motif statique codé (322) par l'autre première borne de réception (501) et pour recevoir les autres données utiles codées (332) par l'autre deuxième borne de réception (502), dans lequel le premier abonné passif (100) est conçu pour générer à partir de l'autre motif statique codé (322) une autre impulsion d'horloge d'échantillonnage et une impulsion d'horloge en synchronisation avec l'autre impulsion d'horloge d'émission/réception, dans lequel l'autre impulsion d'horloge d'échantillonnage présente un autre premier décalage de phase par rapport à l'autre impulsion d'horloge d'émission/réception, dans lequel l'autre impulsion d'horloge synchrone présente un autre deuxième décalage de phase par rapport à l'autre impulsion d'horloge d'émission/réception, dans lequel le premier abonné passif (100) est conçu pour décoder l'autre motif statique codé (322) au moyen de l'autre premier élément SERDES de réception (511) et pour décoder les autres données utiles codées (332) au moyen de l'autre deuxième élément SERDES de réception (512) et pour obtenir ainsi un autre mot de données de réception, dans lequel l'autre premier élément SERDES de réception (511) et l'autre deuxième élément SERDES de réception (512) peuvent fonctionner à l'aide de l'autre impulsion d'horloge d'échantillonnage, dans lequel l'autre mot de données de réception peut être sorti en synchronisation avec l'autre impulsion d'horloge synchrone.
